# EUROPEAN PATENT APPLICATION

(11) **EP 0 728 618 A2**
(43) Date of publication of application: **28.08.1996**
(21) Application number: 95308932.3
(22) Date of filing: 08.12.1995
(51) Int. Cl.: B60R 1/08

(54) **Dimmable rearview mirror for motor vehicles**

(30) Priority: 22.02.1995 US 392041
(71) Applicant: GENTEX CORPORATION, Zeeland, Michigan 49464 (US)
(72) Inventor: Bauer, Frederick T., Zeeland, Michigan 49464 (US); Tonar, William L., Zeeland, Michigan 49464 (US); Byker, Harlan J., Zeeland, Michigan 49464 (US); Cammenga, David J., Zeeland, Michigan 49464 (US)
(74) Representative: Leeming, John Gerard

(57) **Abstract**

An improved dimmable electro-optical rearview mirror for motor vehicles is provided, the mirror including a multilayer combination reflector/electrode that is low in electrical sheet resistance per unit area, and a transparent electrode that is higher in electrical sheet resistance per unit area than the multilayer combination reflector/electrode whereby such components operate in a synergistic fashion resulting in an electro-optic mirror having improved speed of reflectance change, improved high end reflectance, good uniformity of reflectance change across the surface area of the mirror, neutral colour and continuously variable reflectance, and a low end reflectance low enough to relieve strong glare.

## Description

### BRIEF SUMMARY OF THE INVENTION

This invention relates to rearview mirrors for motor vehicles and, more particularly, to improved interior and/or exterior rearview mirrors for motor vehicles.

Heretofore, various automatic rearview mirrors for motor vehicles have been devised which automatically change from the full reflectance mode (day) to the partial reflectance mode (night) for glare protection purposes from light emanating from the headlights of vehicles approaching from the rear. The electrochromic mirrors disclosed in U.S. Patent No. 4,902,108, issued February 20, 1990, for Single-Compartment, Self-Erasing, Solution-Phase Electrochromic Devices, Solutions for Use Therein, and Uses Thereof; U.S. Patent No. 4,917,477, issued April 17, 1990, for Automatic Rearview Mirror System for Automotive Vehicles; U.S. Patent No. 5,128,799, issued July 7, 1992, for Variable Reflectance Motor Vehicle Mirror; U.S. Patent No. 5,202,787, issued April 13, 1993, for Electro-Optic Device; U.S. Patent No. 5,280,380, issued January 18, 1994, for UV-Stabilized Compositions and Methods; and U.S. Patent No. 5,282,077, issued January 25, 1994, for Variable Reflectance Mirror, each of which patents is assigned to the assignee of the present invention and the disclosures of each of which are hereby incorporated herein by reference, are typical of modern day automatic rearview mirrors for motor vehicles. Such electrochromic mirrors may be utilized in a fully integrated inside/outside rearview mirror system or as an inside or an outside rearview mirror system. In general, in automatic rearview mirrors of the types disclosed in U.S. Patent Nos. 4,902,108; 4,917,477; 5,128,799; 5,202,787, 5,280,380 and 5,282,077, both the inside and the outside rearview mirrors are comprised of a relatively thin electro-optic medium sandwiched and sealed between two glass elements. In most cases, when the electro-optic medium is electrically energized, it darkens and begins to absorb light, and the higher the voltage, the darker the mirror becomes. When the electrical voltage is decreased to zero or removed, the mirror returns to its clear state. Also, in general, the electro-optic medium sandwiched and sealed between the two glass elements is preferably comprised of solutions of electrochromic compounds which function as the media of variable transmittance in the mirrors, although it should be understood that other electro-optic media may be utilized, including an approach wherein a tungsten oxide electrochromic layer is coated on one electrode with a solution containing at least another compound to provide counter electrode reaction. When operated automatically, the rearview mirrors of the indicated character generally incorporate light-sensing electronic circuitry which is effective to change the mirrors to the dimmed reflectance modes when glare is detected, the sandwiched electro-optic medium being activated and the mirror being dimmed in proportion to the amount of glare that is detected. As glare subsides, the mirror automatically returns to its normal high reflectance state without any action being required on the part of the driver of the vehicle. The electro-optic medium is disposed in a sealed chamber defined by a transparent front glass element, a peripheral edge seal, and a rear mirror element having a reflective layer, the electro-optic medium filling the chamber. Conductive layers are provided on the inside of the front and rear glass elements, the conductive layer on the front glass element being transparent while the conductive layer on the rear glass element may be either transparent or opaque, i.e., the conductive layer on the rear glass element may also function as the reflective layer for the rear glass element, and the conductive layers on both the front glass element and the rear glass element are connected to electronic circuitry which is effective to electrically energize the electro-optic medium to switch the mirror to nighttime, decreased reflectance modes when glare is detected and thereafter allow the mirror to return to the daytime, high reflectance mode when the glare subsides as described in detail in the aforementioned U.S. Patents. For clarity of description of such a structure, the front surface of the front glass element is sometimes referred to hereinafter as the first surface, and the inside surface of the front glass element is sometimes referred to as the second surface. The inside surface of the rear glass element is sometimes referred to as the third surface, and the back surface of the rear glass element is sometimes referred to as the fourth surface.

In accordance with one aspect of the present invention, a reflective layer is provided on the inside (third surface) of the back glass of a dimming portion of the rearview mirror, which layer is comprised of a series of coatings, hereafter called the multilayer combination reflector/electrode, which also forms an integral electrode in contact with the electrochromic media. The other electrode on the inside (second) surface of the front glass is a transparent electrode which also contacts the electrochromic media inside the mirror element. The series of coatings of the reflector/electrode is comprised of at least a base coating which bonds to the glass surface tenaciously and resists the corrosive action of the materials in the electrochromic media, and a reflective over coating which directly contacts the electrochromic media and which is chosen primarily for its high reflectance, stable behavior as an electrode, resistance to corrosion by the materials of the electrochromic media, resistance to atmospheric corrosion, resistance to electrical contact corrosion, the ability to adhere to the base coating, and ease of cleaning to an uncontaminated, high quality electrode surface. The series of coatings of the multilayer combination reflector/electrode has one or more base coatings and one or more high reflectance over coatings.

In accordance with the present invention, the transparent coating is preferably fluorine doped tin oxide, tin doped indium oxide (ITO) or a series of metal oxide coatings with base coatings to suppress color and reflection followed by an electrically conductive, transparent coating which contacts the electrochromic media directly. Where a series of transparent coatings is used, the materials are chosen for good bonding, resistance to corrosion by the materials of the electrochromic media, resistance to corrosion by the atmosphere, minimal reflectance, high light transmission, neutral coloration and high electrical conductance. Also in accordance with the present invention, to a considerable extent, it is possible to make the reflective electrode very high in electrical conductance to compensate in a synergistic fashion with a transparent electrode that is lower in electrical conductance so the net result is an electrochromic mirror which darkens and clears acceptably fast and uniformly with excellent optical properties.

This synergistic structure is applicable for both inside and outside rearview mirrors for motor vehicles. When the multilayer combination reflector/electrode is used in any mirror, it has the inherent advantage of reducing double images, distortion, and multiple images from raindrops, dust, etc., while providing excellent speed of reflectance change, good high end reflectance, good uniformity of reflectance change across the surface area of the mirror, neutral color, continually variable reflectance and a low end reflectance low enough to relieve strong glare. The reduction in double images and distortion is particularly useful in the case of dimmable convex mirrors which use glass that is bent but may have slight variations in radius of curvature or slight ripple or warp that result in slight imperfections in matching two pieces of bent glass required to make a convex, solution based electrochromic mirror.

The present invention can overcome disadvantages in prior rearview mirrors of the indicated character and provide an improved, robust, low cost dimmable rearview mirror for motor vehicles, which mirror is capable of operating in harsh environments over wide variations in temperature, humidity, vibration, atmospheric corrosion, salt spray, electronic disturbances, and sand and grit abrasion,and which is resistant to damage from vehicle crashes and owner abuse.

The present invention can also provide an improved dimmable rearview mirror which increases the safety of night driving.

The present invention can further provide an improved electro-optic, dimmable rearview mirror for motor vehicles, which mirror is relatively economical to manufacture and assemble, durable, efficient and reliable in operation.

The present invention can still further provide an improved dimmable rearview mirror for motor vehicles wherein excellent speed of reflectance change, good high end reflectance, good uniformity of reflectance change across the surface area of the mirror, neutral colour, continually variable reflectance and good low end reflectance are obtained.

The above features and advantages of the present invention will be further described hereinafter with reference to the following description of exemplary embodiments, and the accompanying drawings, in which:-
Figure 1 is a front elevational view schematically illustrating an inside/outside rearview mirror system for motor vehicles, the system including a dimmable inside rearview mirror together with two dimmable outside rearview mirrors all of which embody the present invention and all of which are adapted to be installed on a motor vehicle in a conventional manner whereby the mirrors face the rear of the vehicle and can be viewed by the driver of the vehicle to provide a rearward view to the driver;
FIG. 2 is an enlarged simplified sectional view of the inside rearview mirror illustrated in FIG. 1, taken on the line 2-2 thereof;
FIG. 3 is an exploded view of the left electro-optic, dimmable outside rearview mirror illustrated in FIG. 1;
FIG. 4 is a front elevational view of the mirror illustrated in FIG. 3;
FIG. 5 is a simplified top plan view of the mirror illustrated in FIG. 4; and
FIG. 6 is a simplified side elevational view of the right side of the mirror as viewed in FIG. 4, showing the electro-optic structure.

### DETAILED DESCRIPTION

In general, in inside and outside rearview mirrors embodying the present invention, the rearview mirror assembly is comprised of a relatively thin layer of an electro-optic medium sealed between two glass elements. When the electro-optic medium is electrically energized, it darkens and begins to absorb light, and the higher the voltage, the darker the mirror becomes. When the electrical voltage is decreased to zero or is removed, the electro-optic medium returns to its clear state. Rearview mirrors embodying the present invention may, for example, incorporate light-sensing electronic circuitry of the type illustrated and described in the aforementioned U.S. Patent No. 4,917,477. Also, the components of mirrors embodying the present invention may be of the types disclosed in the aforementioned U.S. Patent Nos. 4,902,108; 5,128,799; 5,202,787; 5,280,380 and 5,282,077. It should be understood, however, that other types of electronic circuitry and other types of electro-optic media and other components may be utilized in mirrors embodying the present invention.

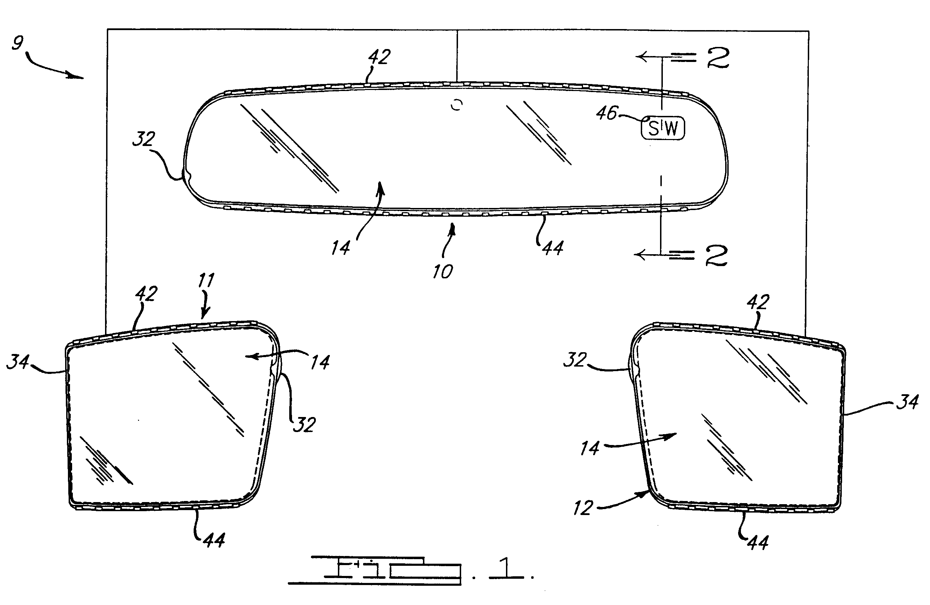

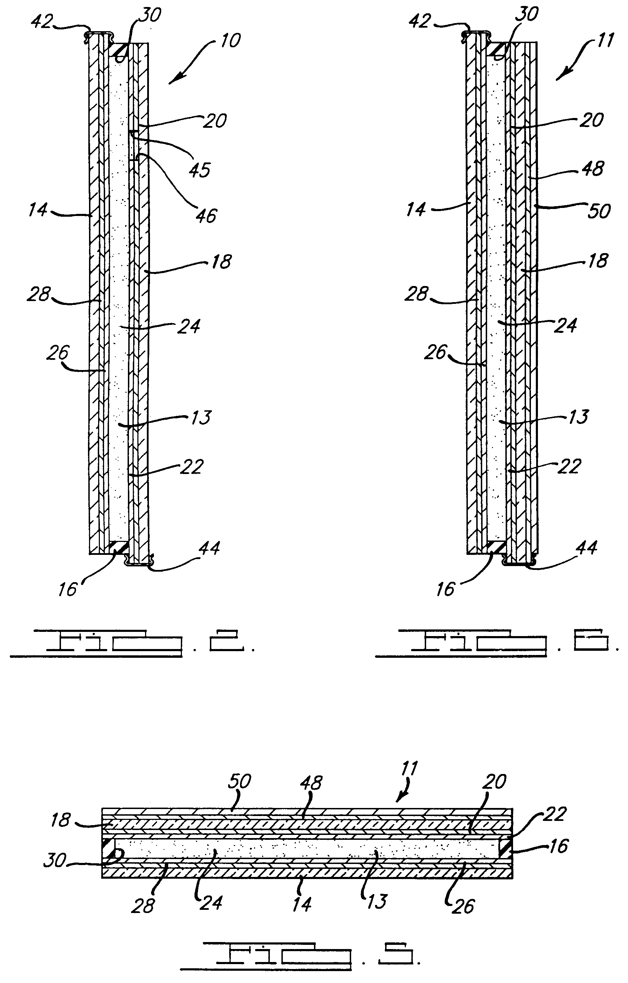

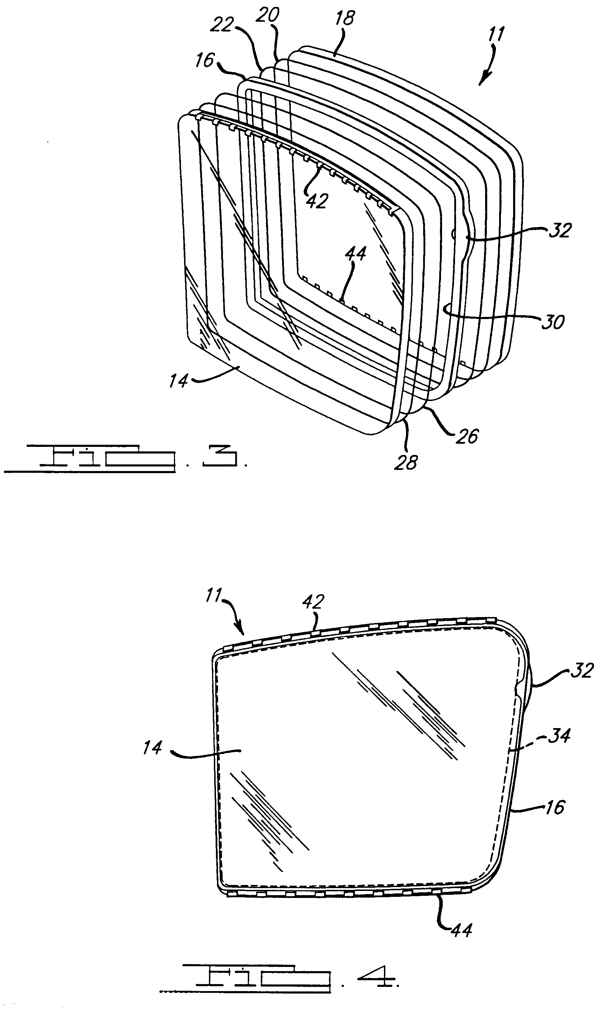

Referring to the drawings, an electro-optic inside/outside mirror assembly, generally designated 9, embodying the present invention is depicted in FIGS. 1 through 6. Since some of the layers of each of the mirrors in the assembly 9 are very thin, the scale has been distorted for pictorial clarity. As shown in the drawings, the mirror assembly 9 includes an inside mirror 10 and outside mirrors 11 and 12. For clarity, in the drawings, like numbers identify components of the inside and outside mirrors which may be slightly different in configuration but which function in substantially the same manner and obtain the same results as similarly numbered components. For example, the shape of the front glass element of the left outside mirror is the reverse of the shape of the right outside mirror, and the front glass element of the inside mirror is generally longer and narrower than the front glass elements of the outside mirrors. Each of the mirrors 10, 11 and 12 includes a sealed chamber 13, defined by a front glass element 14, an edge seal 16, and a rear glass element 18, having reflective and electrically conductive metal layers 20 and 22, respectively. An electro-optic medium 24 having the desired electro-optic properties fills the chamber 13, and a transparent electrically conductive layer such as a fluorine-doped tin oxide conductive layer 26 is carried by the front element 14. The electrically conductive layers are connected to an electrical circuit as will be described hereinafter in greater detail. If desired, a color suppression coating or coatings, such as 28, may be disposed between the conductive layer 26 and the adjacent rear surface of the front element 14. Light rays enter through the front glass element 14, the color suppression coating(s) 28, the transparent conductive layer 26 and the electro-optic medium 24 before being reflected from the electrically conductive and reflective layer 22 (or layers 20 and 22 if layer 22 is extremely thin) provided on the rear glass element 18. The reflected rays exit by the same general path traversed in the reverse direction. In electrochromic media both the entering rays and the reflected rays are attenuated in proportion to the degree to which the electro-optic medium 24 is light-absorbing while in other electro-optic media the light rays may, in some cases, only be attenuated in one direction. When the electro-optic medium 24 is electrochromic and highly light absorbing, the intensity of the exiting rays is diminished, the dim image remaining mainly being from light rays which are reflected off of the front surface of the front glass element 14 and the interface between the front glass element 14 and the coatings 28 and/or 26. Thus, the basic structural elements of the electro-optic portion of each of the mirrors includes two electrode-bearing sides or walls 14 and 18, a spacing or separating seal 16, which spaces apart and holds the walls in substantially parallel relationship in an assembled device, and which surrounds a volume which in an assembled device is defined by the inside surfaces of electrode layers on the electrode-bearing walls as well as the circumferential inside walls 30 of the sealing member 16. The volume of the chamber 13 is preferably filled through a sealable fill port 32 with any of the electro-optic media disclosed in this or the aforementioned patents which have reversibly variable transmittance in the operation of the device, the media in the chamber 13 being in contact with both electrode layers 22 and 26 during operation of the mirror. It will be understood that the electro-optic medium for achieving variable reflectance could be other solution-phase electrochromics, solid electrochromics, a combination of the two in the form of a hybrid, or any of the above in a polymerized matrix. A liquid crystal, dipolar suspension or other electro-optic medium could also be utilized in mirrors embodying the present invention.

In accordance with the present invention, the reflective surface on the inside of the rear glass 18 is comprised of a series of coatings, hereinafter termed the multilayer combination reflector/electrode, which serves as a mirror reflectance layer and also forms an integral electrode in contact with the electrochromic media. The other electrode on the inside surface of the front glass 14 is the transparent electrode 26 which also contacts the electrochromic media inside the mirror element. The series of multilayer combination reflector/electrode coatings is comprised first of a base coating which bonds to the glass surface tenaciously and resists the corrosive action of the materials in the electrochromic media. The base coating is preferably chromium, but alternatively may be stainless steel, nickel-chromium, titanium, gold, silver, or any material or series of coatings which accomplish the objectives above stated. The thickness of the base coating is typically 100 to 1500 angstroms and is more typically 200 to 800 angstroms. The final reflective coating which directly contacts the electrochromic media is chosen primarily for its high reflectance, resistance to attack by the electrochromic media, resistance to atmospheric corrosion, resistance to electrical contact corrosion, and the ability to adhere to the base coating. The preferred material for the reflective coating is rhodium which has excellent hardness, excellent reflectance and excellent conductance, but it should be understood that it is alternatively possible to choose from a group of metals and their alloys such as, but not limited to, platinum, ruthenium, iridium and stainless steel or multiple layers including combinations thereof. The thickness of the reflective over coating is typically 100 to 1000 angstroms and is more typically 100 to 600 angstroms. The series of coatings of this multilayer combination reflector/electrode has one or more base coating(s) which generally provide high conductance and one or more over coatings which provide additional conductance and high reflectance. By way of example the sheet resistance of the multilayer combination reflector/electrode may be approximately 1 to 10 ohms per square.

The transparent coating 26 is preferably made of fluorine doped tin oxide or ITO or alternately a series of coatings with a base coating(s) to suppress color and reflection followed by a conductive transparent coating which contacts the electrochromic media directly. Where a series of transparent coatings is used, the materials are chosen for good bonding, good resistance to corrosion by the materials in the electrochromic media, good resistance to corrosion by the atmosphere, minimal reflectance, high light transmission, neutral coloration and high electrical conductance. Types of low cost transparent electrode substrates include "TEK 20" or "TEK 15" coated glass manufactured by Libbey Owens-Ford of Toledo, Ohio, but other suitable coatings are ITO or extremely thin metal layers which may alternatively function as the transparent electrode of the invention.

Transparent electrode materials are inherently limited in the balance of properties and cost. Low sheet resistance transparent coatings with a sheet resistance below approximately 10 ohms per square tend to have low transmission and other attendant shortcomings including possible haziness, coloration, non-uniformity of coating thickness and high cost. This makes a low sheet resistance transparent coating less practical for electrochromic mirrors. To a considerable extent, it is possible to make the multilayer combination reflector/electrode low in electrical resistance to compensate in a synergistic fashion with a transparent electrode that is higher in electrical resistance so the net result is an electrochromic mirror which darkens and clears acceptably fast and uniformly over its surface area, with excellent optical properties.

To demonstrate the surprising nature of the synergy, electrochromic mirrors have been constructed with a multilayer combination reflector/electrode of about 3 and of about 7 ohms per square sheet resistance with a front transparent electrode of about 18 to 22 ohms per square or higher which show remarkably good results for speed and uniformity of coloration and clearing. Electrochromic mirrors with reflectors on the front surface of the rear element have been previously described, but the use of multilayer coatings that combine to provide high reflectance, good adhesion to glass, low sheet resistance, and ease of cleaning for electrochromic mirrors, especially in combination with a low cost high sheet resistance transparent coating, is a major improvement. Thus the present invention provides a synergistic mismatch using a high electrical conductance multilayer combination reflector/electrode on the third surface with a lower electrical conductance transparent front electrode on the second surface to achieve a cost effective, high performance, electrochromic mirror. This concept is also applicable to any technology where the electrical current requirement of the electro-optic medium sandwiched between two coated glass substrates is comparatively high or where the area is comparatively large. This new synergistic structure is equally applicable to dimmable inside rearview mirrors for motor vehicles. When used in any mirror, it has the inherent advantage of reducing double images, distortion, and multiple images from raindrops, (particularly with convex or spherically curved mirrors), while providing excellent speed of reflectance change, good high end reflectance, good uniformity of reflectance change over the area of the device, neutral color and a low end reflectance, low enough to relieve strong glare.

The invention is illustrated in more detail in the following examples:

### EXAMPLE 1

A multilayer combination reflector/electrode was prepared by sequentially depositing approximately 300 angstroms of titanium, approximately 200 angstroms of gold and approximately 200 angstroms of platinum on the 6.6 cm by 14.4 cm surface of a 0.2 cm thick sheet of soda lime float glass. The deposition was accomplished by rotating the glass sheet past three separate metal targets in a magnetron sputtering system with a base pressure of a 3 x 10⁻⁶ torr and an argon pressure of 2 x 10⁻³ torr. The first surface, CIE curve white light reflectance from the multilayer combination reflector/electrode with the platinum surface in contact with air, measured according to the procedure of SAE J964, was 71.9 percent and the sheet resistance of the metal layer stack was 3.2 ohms per square.

This multilayer combination reflector/electrode coated glass was used as the rear element of an electrochromic mirror device. The front element was a sheet of TEK 20 transparent conductor coated glass of the same size as the rear element. The sheet resistance of the transparent conductor was approximately 20 ohms per square. The two elements were bonded together by an epoxy perimeter seal with the transparent conductor electrode and multilayer combination reflector/electrode offset from, substantially parallel to and facing each other as shown in Figure 2. The spacing between the electrodes was about 0.014 cm. The device was vacuum filled through a small gap left in the perimeter seal with a solution made up of:
0.034 molar 5,10-dihydro-5,10-dimethylphenazine
0.034 molar 1,1'-di(phenyl propyl)-4,4'-bipyridinium difluoroborate
0.5 molar ethyl-2-cyano-3,3-diphenylacrylate
in a solution of 3 wt% Elvacite™ 2041 polymethylmethacrylate resin dissolved in propylene carbonate.

The small gap was plugged with a UV cure adhesive which was cured by exposure to UV light.

The reflectance of the device, (measured as before for the rear element), with no voltage applied was 56 percent and with 1.2 volts applied the reflectance decreased over a period of 5 seconds to 10 percent and within 10 seconds to 7.5 percent. On short circuiting the device, the reflectance increased over a period of 15 seconds back to 56 percent.

### EXAMPLE 2

Other than as specifically mentioned, the conditions of Example 1 were used in this example. A multilayer combination reflector/electrode was prepared by sequentially depositing approximately 300 angstroms of chromium, approximately 500 angstroms of silver and approximately 300 angstroms of platinum at a base pressure of 3.7 x 10⁻⁶ torr and an argon pressure of 8 x 10⁻³ torr. The first surface reflectance was 73.3 percent and the sheet resistance was 0.1 ohms per square.

When an electrochromic mirror device was fabricated with this multilayer combination reflector/electrode, the device had a high end reflectance of 57.0 percent, a low end reflectance of 6.5 percent and changed from 57.0 percent to 10.0 percent reflectance in 2.0 seconds with the application of 1.2 volts.

### EXAMPLE 3

Other than as specifically mentioned, the conditions of Example 1 were used in this example. A multilayer combination reflector/electrode was prepared by sequentially depositing approximately 600 angstroms of chromium and approximately 300 angstroms of platinum. The base pressure of 2.1 x 10⁻⁶ torr and the argon pressure of 8 x 10⁻³ torr. The first surface reflectance was 73.8 percent and the sheet resistance was 3.2 ohms per square.

When an electrochromic mirror device was fabricated with this multilayer combination reflector/electrode, the device had a high end reflectance of 58.0 percent, a low end reflectance of 7.0 percent and changed from 58.0 percent to 10.0 percent reflectance in 2.7 seconds with the application of 1.2 volts.

### EXAMPLE 4

A multilayer combination reflector/electrode was prepared by the sequential deposition of approximately 600 angstroms of chromium and approximately 100 angstroms of 316 stainless steel on the 19 cm by 66 cm surface of a 0.2 cm thick sheet of flat soda lime float glass and on the convex side of a 22 cm diameter circle of glass which had been press bent to a uniform spherical curvature with a radius of curvature of 140 cm. The glass which was bent was TEK 20 tin oxide coated glass manufactured by Libbey Owens-Ford of Toledo, Ohio, and the tin oxide coating was on the concave side after the glass was bent. The deposition was accomplished in a large in-line sputtering system. The first surface reflectance from the multilayer combination reflector/electrode coatings was about 58 percent and the sheet resistance was about 7 ohms per square.

The flat and the bent glass sheets were cut into mirror shapes which were approximately 10 cm high and 16 cm wide. These were used as the rear elements of dimmable mirrors for the outside of an automobile as described below. As compared to glass coated only with chromium metal, these pieces of multilayer combination reflector/electrode coated glass were dramatically easier to clean to a condition in which they behaved as uniform high quality electrodes without poorly coloring spots and blemishes in the final electrochromic dimmable mirror devices.

The flat and convex pieces of multilayer combination reflector/electrode coated glass were matched with mirror-shaped pieces of TEK 20 coated pieces of flat and convex coated glass respectively. The front element convex mirror glass was also bent such that the tin oxide coating was on the concave side. Mirror devices were made by sealing nearly all the way around the perimeter of the glass pieces with an epoxy seal containing glass bead spacers which provided for a 0.015 cm spacing between the TEK 20 transparent, tin oxide electrode and the multilayer combination reflector/electrode. The spacing between the electrode surfaces was filled with a solution made up of:
0.028 molar 5,10-dihydro-5,10-dimethylphenazine
0.034 molar 1,1'-di(phenylpropyl)-4,4'-bipyridinium difluoroborate
0.030 molar 2-(2'-hydroxy-5'-methylphenyl)-benzotriazole
in a solution of 3 wt% Elvacite™ 2041 polymethylmethacrylate resin
dissolved in propylene carbonate.

The small gap in the perimeter seal was plugged with a UV cure adhesive which was cured by exposure to UV light.

The high end reflectance of the mirrors was approximately 45 percent and the low end reflectance was approximately 7 percent. The mirrors changed reflectance from 45 percent to 15 percent reflectance in about 5 seconds and provided excellent glare relief when dimmed to the appropriate reflectance level during nighttime driving.

### EXAMPLE 5

Every aspect of Example 4 was repeated with the exception that the multilayer combination reflector/electrode was prepared by the sequential deposition of approximately 400 angstroms of chromium and approximately 200 angstroms of rhodium. The first surface reflectance from the multilayer combination reflector/electrode was about 70 percent and the sheet resistance was about 7 ohms per square.

The flat and convex dimmable mirror devices prepared with this multilayer combination reflector/electrode according to the procedure of Example 4 had a high end reflectance of about 55 percent and a low end reflectance of about 7 percent with a speed of reflectance change similar to the mirrors of Example 4.

With such a construction in which there is a transparent tin oxide conductive coating on the second surface of the front convex element and a transparent tin oxide conductive coating 48 on the fourth surface of the rear convex element, the tin oxide coatings assist in the bending operation because the front and rear glass elements and their associated tin oxide coatings have the same heating and cooling characteristics during the bending operation thereby effecting a close match in the curvature of the front and rear elements as compared with trying to match the bending of tin oxide coated glass with that of uncoated glass. Moreover, with a multilayer combination reflector/electrode on the third surface of either a flat or a convex rear element, the tin oxide coating 48 on the fourth surface of either a flat or a convex rear element may be utilized as a heater. In the alternative, a conventional heater 50 may be bonded directly to the tin oxide coating 48 on the fourth surface of the rear glass element.

An automobile equipped with an automatic inside electrochromic mirror, one of the above flat mirrors as the driver's side outside mirror and one of the above convex mirrors as the passenger side outside mirror allowed the automobile operator to drive at night with essentially complete protection from glare from the headlamps of following vehicles.

It has been observed that chromium coatings alone can be difficult to clean during assembly of the entire mirror, resulting in a finished mirror that may exhibit contamination spots and areas of slower darkening and clearing. The use of a high reflectance material, such as rhodium alone, can be very costly at thicknesses that provide low sheet resistance, but coated over the above-mentioned base coating(s) such as chromium results in a rear glass element which is easily cleaned prior to assembly, resulting in a finished mirror that is more optically perfect and free of contamination and darkening defects. Chromium or stainless steel alone also have the problem that the high end reflectance of the finished mirror is low considering the attendant losses of light from the transparent coated front substrate and electrochromic media. A problem with stainless alone and to a lesser extent chromium alone is poor electrical contact stability to the conventional spring clip type buss bars or other electrical contact means.

The use of an inert high reflectance coating also makes attachment of spring clip type buss bars or other contact attachments more stable and trouble free, since non-conductive compounds and oxides do not form as readily under pressure contact areas. The result of low stability electrical contact is a mirror which loses its uniformity, coloration and clearing speed over the long life required in the motor vehicle industry.

The present invention thus provides a robust, low cost, dimmable rearview mirror for automotive vehicles, which mirror is capable of operating in harsh environments over wide variations in temperature, humidity, vibration, atmospheric corrosion, salt spray, electronic disturbances and sand and grit abrasion, and which mirror is resistant to damage from vehicle crashes and owner abuse. An additional benefit from sealing the main area of the mirror reflector inside the dimmable mirror element is long life of the reflector in the motor vehicle environment.

It is common with outside dimmable mirrors to adhere a resistance heater to the reflective structure at the back of the rear glass substrate. This heater and its associated adhesive can cause incompatibility and field problems if conventional reflective material, such as silver, is on the back side of the back glass substrate. It is also common practice to adhesively bond the electrochromic mirror assembly to a plastic backing plate often called the glass case. Normal temperature variations experienced by this assembly can cause large forces to be exerted on a reflector structure on the back or fourth surface due to the thermal expansion mismatch of the materials involved. The adhesives used can also lead to chemical attack and degradation of a fourth surface reflector. Such problems are avoided by the present invention when the reflector is located inside the device, and the heater is adhered directly to the glass (fourth surface) of the rear glass element or to the tin oxide coating of the TEK 20 layer which may optionally be on the fourth surface.

Heretofore, problems have been encountered with a conventional silver reflector on the back surface of the rear glass, such problems being known as silver spoilage and silver lift, and are avoided with the multilayer combination reflector/electrode located inside the mirror element and protected by the rear glass. With the multilayer combination reflector/electrode inside the mirror element, the environmental factors are limited to those that result from contact with the materials of the electrochromic media and the offset area where electrical contact is made, whereas with the reflector on the back of the rear glass surface, a number of other difficult environmental factors must be dealt with for the reflector to survive during the life of the mirror especially on the exterior of a motor vehicle.

Speed of coloring, good high end reflectance (typically greater than 50% for exterior mirrors and greater than 60% for interior mirrors) and low cost are important requirements for dimmable mirrors, and the present invention provides a mirror meeting such requirements. The present invention also makes it possible to use comparatively low cost practical electrode coatings to make a surprisingly high performance mirror. Highly conducting transparent coatings are either nondurable, low in transmissivity and/or very high in cost. For this reason it is desirable to use comparatively low cost durable transparent coatings which have the inherent disadvantage that their conductance is lower than that of expensive coatings. Metals, on the other hand, have high conductance which can provide great advantage when used in accordance with the present invention. Electrochromic mirrors with reflector/electrodes involving a single metal layer on the front surface of the rear element have been previously described. However, the concept of creating a dimmable mirror where the electrical conductance of the transparent electrode at the back surface of the front element is purposely made much lower than the multilayer combination reflector/electrode conductance at the front surface of the rear element provides a major improvement. This intentional mismatch of conductance in a symbiotic relationship using practical low cost coatings provides a breakthrough of significant commercial potential. In accordance with the present invention the conductance of the transparent electrode is substantially lower than that of the multilayer combination reflector/electrode, and the multilayer combination reflector/electrode is comprised of two or more coatings. The first coating on the rear glass is preferably the low cost, high conductance base metal such as chromium. The final coating on the multilayer combination reflector/electrode is the thin, high reflectance metal such as rhodium for the purpose of providing high reflectance and high stability in use as an electrode for the electrochromic device. The coating(s) on the back surface of the front element may include one or more color suppression coatings followed by fluorine doped tin oxide, but it must be understood that any transparent coating having the required properties which is substantially lower in conductance than the coatings on the front surface of the rear element would be suitable. The invention may be incorporated in both inside and outside electrochromic mirrors which may incorporate ambient and glare light sensors, the glare light sensor being positioned either behind the mirror glass and looking through a section of the mirror with the reflective material removed or partially removed, or the glare light sensor can be positioned outside the reflective surfaces. In the alternative, areas of the electrode and reflector, such as 45 and 46, respectively, may be removed, or partially removed in, for example, a dot pattern, to permit a vacuum fluorescent display, such as a compass or clock, to show through to the driver of the vehicle. The present invention is also applicable to a mirror which uses only one video chip light sensor to measure both glare and ambient light and which is further capable of determining the direction of glare. An automatic mirror on the inside of a vehicle, constructed according to this invention, can also control one or both outside mirrors as slaves in an automatic mirror system.

The present invention also has application in the construction of elements for mirrors where high maximum reflectance is desired, and the electrochromic materials may be solution phase containing liquids, gels, rigid gels and/or polymers. It may also be a hybrid design where some or all of the electrochromic materials are not in solution and may be confined on the surfaces of the electrodes. The present invention also particularly applies to electro-optic mirrors which draw more than 10 milliamps in operation at any point in their process of dimming.

The invention is particularly effective when used with selected low cost transparent coatings, as for example, "TEK 20", marketed by Libbey Owens-Ford Co. of Toledo, Ohio. The benefits over the most commonly used automatic mirrors in use today are as follows: mirrors embodying the present invention change reflectance faster, have a clearer image, have better coloration of image in the nondimmed state, eliminate the need and inconvenience of putting silver reflective coatings on the back surface of the rear glass, have fewer handling steps thereby creating fewer chances for scratching in the glass during processing and providing a final product with better optical quality, and having fewer surfaces through which the light must travel, and the first surface and third surface reflections are closer together with the result that there are less multiple images and less distortion in the mirror for the driver. Moreover, when used as an outside mirror, there are less reflections from raindrops and dust on the front surface of the front glass, and the reflector at the front surface of the rear glass element is protected from aging, exposure to airborne contaminants and physical abuse that often affect reflectors placed at the back surface of the rear glass element.

With reference to Figures 2 and 6, a preferred arrangement for connecting the electronic conductive layers to a power source is illustrated. In this arrangement, the two electrode-bearing front and rear glass elements 14 and 18 are displaced in opposite directions, laterally from, but parallel to, the chamber 13 in order to provide exposed areas on the front and rear glass elements. Electrically conductive spring clips 42 and 44 are provided which are placed on the coated glass sheets to make electrical contact with the exposed areas of the electrically conductive layers. Suitable electrical conductors (not shown) may be soldered or otherwise connected to the spring clips 42 and 44 so that desired voltage may be applied to the device from a suitable power source. It is preferred but not essential that the multilayer combination reflector/electrode function and be maintained as the cathode in the circuitry.

Rearview mirrors embodying the present invention preferably include a bezel 34 which extends around the entire periphery of the assembly. The bezel 34 conceals and protects the spring clips 42 and 44 and the peripheral edge portions of both of the front and the rear elements 14 and 18. By way of example, the bezel 34 may be of the type disclosed in the co-pending Continuation Application of William L. Tonar, Serial No. 08/142,875, filed October 29, 1993, which is a continuation of Application Serial No. 07/907,055, filed July 1, 1992, both of which applications are assigned to the assignee of the present invention and both of which applications are hereby incorporated herein by reference. The assembly may also include a conventional heater and a plastic mirror back or glass case which is adapted to snap into an outside mirror housing (not shown) that may be of any desired configuration, the outside mirror housing being supported on the outside of an automotive vehicle in any desired or conventional manner, and the inside mirror being supported inside the vehicle in any desired or conventional manner, whereby the field of view of each mirror may be adjusted by the driver of the vehicle in a conventional manner, as for example, through manual adjustment or by mechanical or electrical means of the types conventionally provided on modern day automobiles.

While preferred embodiments of the invention have been illustrated and described, it will be understood that various changes and modifications may be made without departing from the scope of the invention which is defined by the appended claims.

## Claims

1. An electro-optically dimming rearview mirror for motor vehicles, said mirror comprising, in combination, front and rear spaced elements, said front element and said rear element defining a chamber therebetween, said front element being transparent, the side of said front element confronting said rear element including transparent electrically conductive means, including combined electrically conductive light reflecting means, said chamber containing an electro-optic reversible variable transmittance medium in contact with said transparent electrically conductive material on said front element and said combined electrically conductive light reflecting means on said rear element, said combined electrically conductive light reflecting means on said rear element being effective to reflect light through said medium and through said front element when said light reaches said combined electrically conductive light reflecting means after passing through said medium and through said front element, said combined electrically conductive light reflecting means on said rear element having a lower electrical resistance per unit area than said transparent electrically conductive means on said front element.

2. A mirror according to claim 1, wherein said transparent electrically conductive means on said front element comprises indium tin oxide.

3. A mirror according to claim 1 or 2, wherein said combined electrically conductive light reflecting means on said rear element comprises chromium and rhodium.

4. A mirror according to claim 1, 2 or 3, including indicia means visible through said front element.

5. A mirror according to claim 1, 2, 3 or 4, wherein said transparent electrically conductive means on said front element includes colour suppressing means and a doped tin oxide in contact with said electro-optic medium.

6. A mirror according to any one of the preceding claims, wherein said combined electrically conductive light reflecting means on said rear element includes at least one high conductance base coating over which is deposited at least one high reflectance coating.

7. A mirror according to any one of the preceding claims, wherein said combined electrically conductive light reflecting means on said rear element includes separate layers of chromium and rhodium.

8. A mirror according to claim 7, wherein said layer of rhodium is on the side of said layer of chromium confronting said front element.

9. A mirror according to claim 8, wherein said layer of chromium is greater in thickness than said layer of rhodium.

10. A mirror according to any one of the preceding claims, wherein said combined electrically conductive light reflecting means has an opening, and further comprising vacuum fluorescent display means visible through said front element and through the opening in said combined electrically conductive light reflecting means.

11. A mirror according to any one of the preceding claims, including bezel means extending around the periphery of said front element.

12. A mirror according to any one of the preceding claims, further comprising means for applying electrical potential to said transparent electrically conductive means on said front element and said combined electrically conductive light reflecting means on said rear element to cause variations in the light transmittance of said electro-optic medium.

13. A mirror according to claim 12,wherein said means for applying electrical potential to said transparent electrically conductive means is automatic.

14. A mirror according to any one of the preceding claims, wherein said front and rear spaced elements are made of glass.

15. A mirror according to any one of the preceding claims, wherein said combined electrically conductive light reflecting means has a plurality of layers.

16. A mirror according to any one of the preceding claims, wherein said reversibly variable transmittance medium is an electrochromic medium.

17. A mirror according to any one of the preceding claims, wherein said combined electrically conductive light reflectance means functions as a cathode.

18. A mirror according to any one of the preceding claims, wherein said transparent electrically conductive means on said front element includes multiple coatings, one of said coatings comprising indium tin oxide.

19. A mirror according to any one of the preceding claims, wherein said combined electrically conductive light reflecting means on said rear element includes coatings selected from the group consisting of rhodium, platinum, ruthenium, iridium, gold, stainless steel, silver, titanium, nickel-chromium and chromium.

20. A mirror according to any one of the preceding claims, including resistance heater means adhered to the side of said rear element remote from said front element.

21. A mirror according to any one of the preceding claims, wherein said transparent electrically conductive means on said front element includes a coating selected from the group consisting of fluorine doped tin oxide and indium tin oxide.

22. A mirror according to any one of the preceding claims, wherein said combined electrically conductive light reflecting means is disposed on the side of said rear element confronting said front element.

23. A mirror according to claim 23, wherein said rear element also includes a conductive transparent coating on the other side than that confronting the front element.

24. A mirror according to any one of the preceding claims, wherein said combined electrically conductive light reflecting means on said rear element includes a first high conductance coating selected from the group consisting of chromium, stainless steel, nickel-chromium, gold, silver and titanium, and alloys thereof, and a second high reflectance coating selected from the group consisting of rhodium, ruthenium, iridium, platinum, chromium and stainless steel and alloys thereof.
